Europäisches Patentamt

European Patent Office

Office européen des brevets

(11) Veröffentlichungsnummer: **0 081 636**
**B1**

(12) # EUROPÄISCHE PATENTSCHRIFT

(45) Veröffentlichungstag der Patentschrift:
23.01.85

(51) Int. Cl.⁴: **F 16 J 15/32**

(21) Anmeldenummer: 82108599.0

(22) Anmeldetag: 17.09.82

(54) **Radialwellendichtring mit einer federnd gegen die abgedichtete Welle gepressten Dichtlippe aus einem gummielastischen Werkstoff.**

(30) Priorität: 02.12.81 DE 3147625

(43) Veröffentlichungstag der Anmeldung:
22.06.83 Patentblatt 83/25

(45) Bekanntmachung des Hinweises auf die Patenterteilung:
23.01.85 Patentblatt 85/4

(84) Benannte Vertragsstaaten:
AT FR GB IT SE

(56) Entgegenhaltungen:
DE - A - 1 525 882
FR - A - 1 468 256
FR - A - 1 494 280
FR - A - 2 447 499
GB - A - 1 219 272

(73) Patentinhaber: **Firma Carl Freudenberg, Höhnerweg 2,
D-6940 Weinheim/Bergstrasse (DE)**

(72) Erfinder: **Ehrmann, Peter, Regerstrasse 11,
D-6944 Hemsbach (DE)**
Erfinder: **Fuchs, Dieter, Asternweg 8, D-6086 Riedstadt
OT-Crumstadt (DE)**
Erfinder: **Spies, Karl-Heinrich, Dr., Stettiner Strasse 14,
D-6943 Birkenau (DE)**

(74) Vertreter: **Weissenfeld-Richters, Helga, Dr.,
Höhnerweg 2, D-6940 Weinheim/Bergstrasse (DE)**

BUNDESDRUCKEREI BERLIN

**Beschreibung**

Die Erfindung betrifft einen Radialwellendichtring mit einer federnd gegen die abgedichtete Welle gepreßten Dichtlippe aus einem gummielastischen Werkstoff, die auf der der abgedichteten Flüssigkeit zugewandten Seite in eine Kegelfläche übergeht, der flächig ausgebildete Flüssigkeitsabweiser zugeordnet sind, die einen Abstand von der Dichtlippe haben sowie eine Anströmfläche, die sich im wesentlichen parallel zur Richtung der Welle erstreckt, wobei die Flüssigkeitsabweiser auf der Innenseite durch eine Abstreifkante begrenzt sind, die gleichförmig in die Anströmfläche übergeht und die geneigt oder gewölbt ist.

Ein Radialwellendichtring dieser Art ist aus DE-A-1 916 214 bekannt. Die Flüssigkeitsabweiser sind flossenähnlich beweglich ausgebildet und liegen mit dem Innenumfang auf der Oberfläche der abgedichteten Welle auf. Sie haben einen Abstand voneinander und werden bei einer Drehbewegung von der Welle mitgenommen und in der Drehrichtung abgelenkt. Die Flossen dienen insofern als Schaber, und sie haben den Zweck, Fremdkörper und Flüssigkeiten von der Oberfläche der Welle abzustreifen und nach außen wegzuschleudern. Beispielsweise Schmieröl vermag aus diesem Grunde bei hohen Wellendrehzahlen die eigentliche Dichtungszone nicht mehr zu erreichen, und es kann in diesem außerordentlich temperaturempfindlichen Bereich zum Auftreten einer Mangelschmierung kommen, die eine weitere Steigerung der freigesetzten Reibungswärme und einen vorzeitigen Ausfall des Dichtungselementes nach sich zieht. Radialwellendichtringe der angegebenen Art können aus diesem Grunde nicht zur Abdichtung schnell laufender Wellen herangezogen werden.

Der Erfindung liegt die Aufgabe zugrunde, einen Radialwellendichtring vorzuschlagen, der ein zuverlässiges Abdichtungsergebnis bei Wellendrehzahlen bis zu 9000 U/min gewährleistet, und bei dem Anbackungen aus festen Stoffen im Sicherheitsbereich der Dichtungszone nicht mehr auftreten. Die Sicherheitszone umfaßt dabei den Bereich der die Dichtlippe begrenzenden Kegelfläche des Radialwellendichtringes und einen entsprechend großen Ausschnitt aus der Oberfläche der abgedichteten Welle. Die Anbackungen können zu einer Beeinträchtigung der Flexibilität und Elastizität der Dichtlippe führen mit nachteiligen Auswirkungen auf den erzielten Abdichtungseffekt beim Auftreten von Wellenschwingungen.

Die genannten Anbackungserscheinungen bewirken eine Aufweitung des Durchmessers der abgedichteten Welle sowie aufgrund der unregelmäßigen Verteilung eine reliefartige Zerklüftung der Oberfläche. Solche Anbackungserscheinungen können zu einem starken Verschleiß bzw. zu einer schnellen Zerstörung der Dichtlippe führen, wenn eine entsprechende axiale Verlagerung in dem Bereich der Dichtungszone eintritt.

Zur Vermeidung derartiger Schwierigkeiten wird erfindungsgemäß ein Radialwellendichtring der eingangs genannten Art vorgeschlagen, der dadurch gekennzeichnet ist, daß die Abstreifkante von einer dem Drehsinn der Welle entgegengerichteten, spitzwinkligen Schneide gebildet ist, welche durchgehend einen Abstand von der Welle aufweist.

Bei dem vorgeschlagenen Radialwellendichtring wird der auf der Oberfläche der abgedichteten Welle befindliche Ölfilm nicht in einer undifferenten Weise von dieser abgewischt, sondern bis auf einen geringen Restfilm definierter Stärke abgeschält. Der verbleibende Film gewährleistet bei höchsten Wellendrehzahlen eine zuverlässige Schmierung und Kühlung der eigentlichen Dichtungszone. Er wird kontinuierlich erneuert durch das auf der Oberfläche der Welle nachströmende Öl. Ein optimales Ergebnis wird bei Vorhandensein einer eingewölbten Anströmfläche erzielt.

Das Abschälen der äußersten Lagen des nachströmenden Ölfilmes wird durch die aufeinanderfolgenden Abstreifkanten der einzelnen Flüssigkeitsabweiser bewirkt, die schneidenartig in den mit der Welle umlaufenden Ölfilm eindringen. Durch die Vielzahl der auf dem Umfang verteilten Flüssigkeitsabweiser ergibt sich je Umdrehung für die einzelnen Abstreifkanten nur ein winziges Volumen abzuschälenden Öls, was die Gewährleistung einer gleichbleibenden und geringen Dicke des verbleibenden Restfilmes begünstigt. Zugleich ist das jeweils abgeschälte Volumen ausreichend groß, um eine intensive Durchwirbelung mit dem an der Dichtkante umgelenkten restlichen Ölfilm und damit dessen spontane Abkühlung zu bewirken.

Sowohl im Bereich der Kegelfläche des Lippenringes als auch auf der Oberfläche der abgedichteten Welle treten wahrscheinlich aus diesen Gründen auch nach längerem Gebrauch keinerlei Anbackungserscheinungen durch Feststoffe auf.

Nach einer vorteilhaften Ausgestaltung ist es vorgesehen, daß die Abstreifkante mit der Oberfläche und mit der Erstreckung der Welle einen spitzen Winkel einschließt. Die Anströmfläche der Flüssigkeitsabweiser ist in diesem Falle dreieckig begrenzt und das abzuschälende Öl wird im wesentlichen über die dem abgedichteten Medium zugewandte, der Welle am nächsten liegenden Spitze aufgenommen. Besonders gute Ergebnisse werden dann erzielt, wenn die Abstreifkanten mit der Oberfläche und/oder mit der Erstreckung der Welle einen Winkel von 4 bis 28° einschließen.

Die Abstreifkanten sollen sich der Oberfläche der abgedichteten Welle wenigstens an einem Punkt bis auf einen sehr geringen Wert nähern, vorzugsweise bis auf einen Wert von 0,1 bis 0,4 mm. Sie dürfen die Welle keinesfalls berühren, und werden durch die auf der Oberfläche der Welle aufliegende Dichtlippe geführt. Der ursprünglich eingestellte Abstand wird aus diesem Grunde auch beim Auftreten einer radialen Verlagerung der Welle sicher eingehalten.

Die Flüssigkeitsabweiser können einen Abstand von der Kegelfläche des Radialwellendichtringes haben. Der Abstand darf nur sehr gering sein, und beispielsweise 0,1 bis 0,6 mm betragen. Durch die Einhaltung eines solchen Abstandes wird eine Vergleichmäßigung des Strömungsbildes im gesamten Umfangsbereich bewirkt.

Die Flüssigkeitsabweiser können auch unmittelbar an der Kegelfläche anliegen, und in diesem Falle ergibt sich eine Intensivierung der Durchmischung zwischen den in axialer Richtung in aufeinanderfolgenden Stufen von der Welle abgelösten Bestandteilen des Ölfilmes. Insbesondere für eine schnelle Kühlung der zuletzt abgelösten Bestandteile ist eine solche starke Durchmischung von großem Vorteil.

Es ist nicht unbedingt notwendig, die Flüssigkeitsabweiser unmittelbar aus der Kegelfläche des Radialwellendichtringes herauszuformen. Eine entsprechende Ausführung bietet große Vorteile bei der Herstellung, und bietet sich an, wenn präzise Kenntnisse über die erforderliche Detailausbildung vorliegen. In Abhängigkeit von der Viskosität unterschiedlicher Ölsorten und/ oder Temperaturen können jedoch innerhalb des beanspruchten Bereiches Variationen notwendig werden, die es zweckmäßig erscheinen lassen, wenn die Flüssigkeitsabweiser Vorsprünge eines Halteringes sind, der mit der Dichtlippe des Radialwellendichtringes verknüpft ist. Die Einknüpfung kann beispielsweise in der Federrille erfolgen.

Zur Erzielung einer von der Drehrichtung der abgedichteten Welle unabhängigen Wirksamkeit hat es sich als vorteilhaft bewährt, wenn die Flüssigkeitsabweiser auf der Vorderseite und auf der Rückseite Anströmflächen aufweisen. Bei einer solchen Ausführung wird bei Linksdrehung lediglich die Vorderseite der Flüssigkeitsabweiser beaufschlagt, bei einer Rechtsdrehung hingegen nur die Rückseite. Jede dieser beiden Seiten ist entsprechend den Merkmalen des Patentanspruches ausgebildet und der Oberfläche der abgedichteten Welle zugeordnet.

Die Kegelfläche des Radialwellendichtringes kann im Bereich des Außenumfanges in eine Zylinderfläche übergehen, wodurch eine axiale Rückförderung der abgeschälten Ölbestandteile in den abgedichteten Raum begünstigt wird. Eine besonders leichte Aufnahme dieser abgeschälten Bestandteile über die Anströmflächen ergibt sich, wenn diese im Bereich des Innenumfanges annähernd parallel zur Oberfläche der abgedichteten Welle vorgewölbt sind.

Die Flüssigkeitsabweiser können auch in axialer Richtung mehrfach hintereinanderliegend angeordnet sein und dabei gegebenenfalls einen Abstand voneinander haben. In den Zwischenzonen kann sich in diesem Falle eine Querströmung in Umfangsrichtung ausbilden, die zu einer Vergleichmäßigung des Strömungsbildes, bezogen auf den Gesamtumfang, beiträgt.

Der Gegenstand der vorliegenden Erfindung wird anhand der Zeichnung näher erläutert. Es zeigt

Fig. 1 einen Radialwellendichtring der vorgeschlagenen Art in halbgeschnittener Darstellung,

Fig. 2 den Radialwellendichtring gemäß Fig. 1 in der Vorderansicht,

Fig. 3 eine Ausführung ähnlich Fig. 1, wobei jedoch die Flüssigkeitsabweiser Vorsprünge eines Halteringes sind, der mit der Dichtlippe des Radialwellendichtringes verknüpft ist.

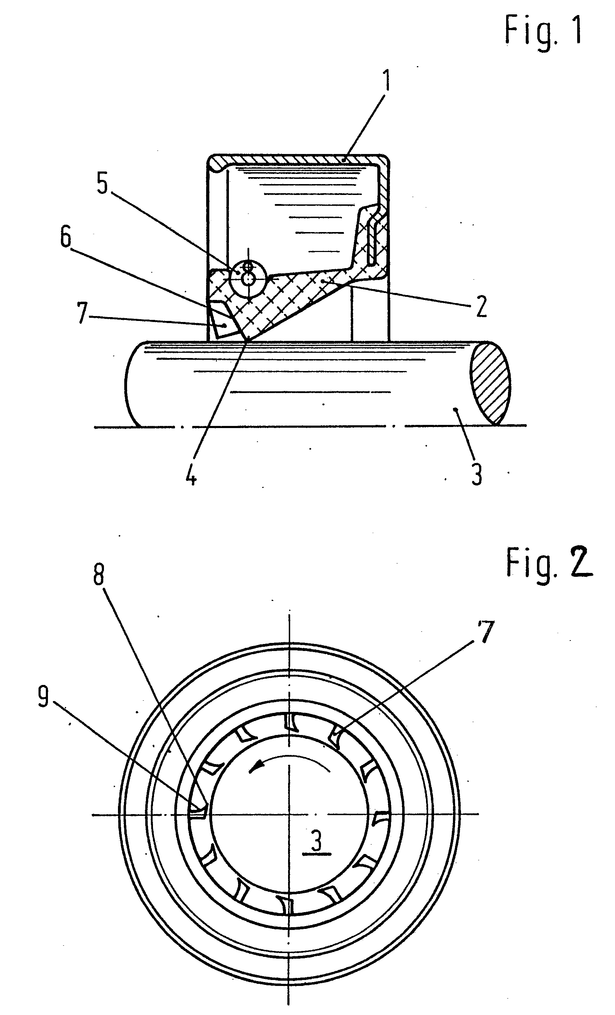

Der Radialwellendichtring gemäß Fig. 1 besteht aus einem Versteifungsring aus Stahlblech, der ein winkelförmiges Profil aufweist und an dessen Innenumfang der Lippenring 2 aus einem elastomeren Werkstoff durch Anvulkanisieren befestigt ist. Der Lippenring 2 weist eine Dichtlippe 4 auf, die durch zwei sich gegenseitig schneidende Kegelflächen gebildet wird.

Die Dichtlippe ist scharfkantig ausgebildet und liegt durch die Kraft einer in der Nut angeordneten Ringwendelfeder 5 mit einer elastischen Vorspannung auf der Oberfläche der abgedichteten Welle 3 auf.

Die dem abzudichtenden Medium zugewandte Kegelfläche 6 des Lippenringes geht im Bereich des Außenumfanges in eine zylindrisch ausgebildete Fläche über. Zwischen diesem Bereich und der Kegelfläche sind gleichförmig auf dem Umfang verteilte Flüssigkeitsabweiser 7 angeordnet, die flächig ausgebildet sind, und die einstückig aus dem Werkstoff des Lippenringes herausgeformt sind.

Fig. 2 dient der Verdeutlichung der Ausbildung der Flüssigkeitsabweiser 7. Diese sind auf der Innenseite durch schneidenartig ausgebildete Abstreifkanten 8 begrenzt, die gleichförmig in die Anströmfläche 9 übergehen und die entgegen der Drehrichtung der Welle vorgewölbt sind. Die Flüssigkeitsabweiser haben durchgehend einen Abstand von der Welle.

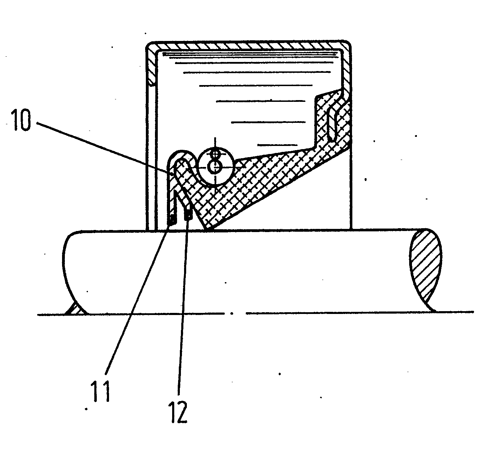

Bei der Ausführung nach Fig. 3 sind die Flüssigkeitsabweiser nicht unmittelbar aus dem Werkstoff des Lippenringes herausgeformt, sondern Bestandteil des aus einem thermoplastischen Werkstoff bestehenden Halteringes 10. Dieser ist in der Federrille des Lippenringes verankert, und er weist durch den Innenumfang 2 Reihen in axialer Richtung hintereinanderliegender Flüssigkeitsabweiser 11, 12 auf.

## Patentansprüche

1. Radialwellendichtring mit einer federnd gegen die abgedichtete Welle (3) gepreßten Dichtlippe (4) aus einem gummielastischen Werkstoff, die auf der der abgedichteten Flüssigkeit zugewandten Seite in eine Kegelfläche (6) übergeht, der flächig ausgebildete Flüssigkeitsabweiser (7; 11, 12) zugeordnet sind, die einen Abstand von der Dichtlippe (4) haben sowie eine Anströmfläche (9), die sich im wesentlichen parallel zur Richtung der Welle (3) erstreckt, wobei die Flüssigkeitsabweiser (7; 11, 12) auf der Innenseite durch eine Abstreifkante (8) begrenzt sind, die gleichförmig in die Anströmfläche (9) übergeht und die geneigt oder gewölbt ist, dadurch gekennzeichnet, daß die Abstreifkante (8) von einer dem Drehsinn der Welle (3) entgegengerichteten, spitzwinkligen Schneide gebildet ist, welche durchgehend einen Abstand von der Welle (3) aufweist.

2. Radialwellendichtring nach Anspruch 1, dadurch gekennzeichnet, daß die Abstreifkante (8) mit der Oberfläche und/oder der Erstreckung der Welle (3) einen spitzen Winkel einschließt.

3. Radialwellendichtring nach Anspruch 2, dadurch gekennzeichnet, daß der spitze Winkel einen Bereich von 4 bis 28° umfaßt.

4. Radialwellendichtring nach einem der Ansprüche 1 bis 3, dadurch gekennzeichnet, daß der kleinste Abstand zwischen der Abstreifkante (8) und der Oberfläche der Welle (3) 0,1 bis 0,4 mm beträgt.

5. Radialwellendichtring nach einem der Ansprüche 1 bis 4, dadurch gekennzeichnet, daß die Flüssigkeitsabweiser (11, 12) einen Abstand von der Kegelfläche (6) des Radialwellendichtringes haben.

6. Radialwellendichtring nach einem der Ansprüche 1 bis 4, dadurch gekennzeichnet, daß die Flüssigkeitsabweiser (7) unmittelbar an der Kegelfläche (6) des Radialwellendichtringes anliegen.

7. Radialwellendichtring nach Anspruch 5, dadurch gekennzeichnet, daß die Flüssigkeitsabweiser (11, 12) Vorsprünge eines Halteringes (10) sind, der mit der Dichtlippe (4) des Radialwellendichtringes verknüpft ist.

8. Radialwellendichtring nach einem der Ansprüche 1 bis 4 oder 6, dadurch gekennzeichnet, daß die Flüssigkeitsabweiser (7) aus der Kegelfläche (6) des Radialwellendichtringes herausgeformt sind.

9. Radialwellendichtring nach einem der Ansprüche 1 bis 4, 6 oder 8, dadurch gekennzeichnet, daß die Kegelfläche (6) des Radialwellendichtringes im Bereich des Außenumfanges in eine Zylinderfläche übergeht.

10. Radialwellendichtring nach einem der Ansprüche 1 bis 9, dadurch gekennzeichnet, daß die Flüssigkeitsabweiser (7; 11, 12) auf der Vorder- und auf der Rückseite Anströmflächen (9) und Abstreifkanten (8) aufweisen.

11. Radialwellendichtring nach einem der Ansprüche 1 bis 10, dadurch gekennzeichnet, daß die Anströmflächen (9) im Bereich des Innenumfanges annähernd parallel zur Umfangsrichtung der Welle geneigt oder vorgewölbt sind.

12. Radialwellendichtring nach einem der Ansprüche 1 bis 5, 7, 10 oder 11, dadurch gekennzeichnet, daß in axialer Richtung mehrere Flüssigkeitsabweiser (11, 12) hintereinanderliegend angeordnet sind.

13. Radialwellendichtring nach Anspruch 12, dadurch gekennzeichnet, daß die axial hintereinander angeordneten Flüssigkeitsabweiser (11, 12) einen Abstand voneinander haben.

**Claims**

1. A radial lip seal having a sealing lip (4) which is pressed elastically against the sealed shaft (3) and is made of a rubber-elastic material, the side of the sealing lip (4) facing towards the sealed fluid merging into a tapered surface (6) to which are allocated fluid deflectors (7; 11, 12) designed with a flat surface, the fluid deflectors (7; 11, 12) being located at a distance from the sealing lip (4) and an approach flow surface (9) which essentially extends in a parallel direction to the shaft (3) and being terminated on the inner side by a wiper edge (8) which merges uniformly into the approach flow surface (9) and which is inclined or curved, caracterised in that the wiper edge (8) is formed by an acute-angled cutting edge directed in the opposite direction to the direction of rotation of the shaft (3), the cutting edge being located continuously at a distance from the shaft (3).

2. A radial lip seal according to claim 1, characterised in that the wiper edge (8) encloses an acute angle with the surface and/or the extension of the shaft (3).

3. A radial lip seal according to claim 2, characterised in that the acute angle lies in the range from 4 to 28°.

4. A radial lip seal according to any of claims 1 to 3, characterised in that the smallest distance between the wiper edge (8) and the surface of the shaft (3) is 0,1 to 0,4 mm.

5. A radial lip seal according to any of claims 1 to 4, characterised in that the fluid deflectors (11, 12) are located at a distance from the tapered surface (6) of the radial lip seal.

6. A radial lip seal according to any of claims 1 to 4, characterised in that the fluid deflectors (7) sit directly against the tapered surface (6) of the radial lip seal.

7. A radial lip seal according to claim 5, characterised in that the fluid deflectors (11, 12) are projections of a retaining ring (10) which is connected to the sealing lip (4) of the radial lip seal.

8. A radial lip seal according to any of claims 1 to 4 or 6, characterised in that the fluid deflectors (7) are formed from the tapered surface (6) of the radial lip seal.

9. A radial lip seal according to any of claims 1 to 4, 6 or 8, characterised in that the tapered surface (6) of the radial lip seal merges into a cylindrical surface in the area of the outer periphery.

10. A radial lip seal according to any of claims 1 to 9, characterised in that the fluid deflectors (7; 11, 12), have approach flow surfaces (9) and wiper edges (8), respectively, on the front and rear sides.

11. A radial lip seal according to any of claims 1 to 10, characterised in that the approach flow surfaces (9) are inclined or curved forward approximately parallel to the peripheral direction of the shaft in the area of the inner periphery.

12. A radial seal according to any of claims 1 to 5, 7, 10 or 11, characterised in that several fluid deflectors (11, 12) are aranged to be located one after the other in the axial direction.

13. A radial lip seal according to claim 12, characterised in that the fluid deflectors (11, 12) arranged axially one after the other are located at a distance from one another.

## Revendications

1. Bague d'étanchéité à lèvre en élastomère (4) prenant appui sous précontrainte sur l'arbre (3) à rendre étanche qui présente du côté tourné vers le liquide à contenir une surface conique (6) pourvue de déviateurs de liquide (7, 11, 12) de forme plate, qui sont à une certaine distance de la lèvre d'étanchéité (4) et qui présentent une surface d'attaque (9) qui s'étend d'une manière essentiellement parallèle à la direction de l'arbre (3), les déviateurs de liquide (7, 11, 12) étant limités sur la face intérieure par un bord racleur (8) qui prolonge uniformément les surfaces d'attaque (9) et qui est incliné ou cintré, caractérisée en ce que le bord racleur (8) est constitué par une arête à angle aigu tournée dans le sens opposé au sens de rotation de l'arbre (3) et qui se trouve toujours à une certaine distance par rapport à l'arbre (3).

2. Bague d'étanchéité selon la revendication 1, caractérisée en ce que les bords racleurs (8) forment avec la surface et/ou la surface de l'arbre (3), un angle aigu.

3. Bague d'étanchéité selon la revendication 2, caractérisée en ce que l'angle aigu est compris entre 4 et 28°.

4. Bague d'étanchéité selon l'une des revendications 1 à 3, caractérisée en ce que la distance la plus faible entre le bord racleur (8) et la surface de l'arbre (3) est de 0,1 à 0,4 mm.

5. Bague d'étanchéité selon l'une des revendications 1 à 4, caractérisée en ce que les déviateurs de liquide (11, 12) sont à une certaine distance de la surface conique (6) de la bague.

6. Bague d'étanchéité selon l'une des revendications 1 à 4, caractérisée en ce que les déviateurs de liquide (7) reposent directement sur la surface conique (6) de la bague.

7. Bague d'étanchéité selon la revendication 5, caractérisée en ce que les déviateurs de liquide (11, 12) sont des saillies dans l'anneau de maintien (10), qui est fixé à la lèvre d'étanchéité (4) de la bague.

8. Bague d'étanchéité selon l'une des revendications 1 à 4 ou 6, caractérisée en ce que les déviateurs de liquide (7) sont formés sur la surface conique (6) de la bague.

9. Bague d'étanchéité selon l'une des revendications 1 à 4, 6 ou 8, caractérisée en ce que la surface conique (6) de la bague se prolonge dans la zone de la périphérie extérieure par une surface cylindrique.

10. Bague d'étanchéité selon l'une des revendications 1 à 9, caractérisée en ce que les déviateurs de liquide (7, 11, 12) présentent des surfaces de contact avec le liquide (9) et des bords racleurs (8) sur leurs faces antérieure et postérieure.

11. Bague d'étanchéité selon les revendications 1 à 10, caractérisée en ce que les surfaces de contact avec le liquide (9) sont disposées approximativement parallèles à la direction de la périphérie de l'arbre dans la zone de la périphérie intérieure.

12. Bague d'étanchéité selon l'une des revendications 1 à 5, 7, 10 ou 11, caractérisée en ce que plusieurs déviateurs de liquide (11, 12) sont disposés axialement les uns derrière les autres.

13. Bague d'étanchéité selon la revendication 12, caractérisée en ce que les déviateurs de liquide (11, 12), disposés les uns derrière les autres dans le sens axial, sont écartés entre aux.

0 081 636

Fig. 1

Fig. 2